# EUROPEAN PATENT APPLICATION

(11) **EP 2 871 844 A1**
(43) Date of publication of application: **13.05.2015**
(21) Application number: 13827980.7
(22) Date of filing: 01.08.2013
(51) Int. Cl.: H04N 19/00, H04N 5/76

(54) **VIDEO RECORDING METHOD AND SYSTEM**

(30) Priority: 09.08.2012 CN 201210281700
(71) Applicant: ZTE Corporation, Shenzhen, Guangdong 518057 (CN)
(72) Inventor: DING, Xiangjun, Shenzhen, Guangdong 518057 (CN); ZHANG, Wuxiong, Shenzhen, Guangdong 518057 (CN)
(74) Representative: Bugnion Genève
(86) International application number: PCT/CN2013/080621
(87) International publication number: WO 2014/023179

(57) **Abstract**

A video recording method and system are disclosed in the embodiments of the present invention, which enables SDP transmission to be complete and guarantees that a decoder can perform correct decoding, thereby realizing rapid processing of video information without loss. The method includes: acquiring an SDP of a client, and checking whether the SDP contains SPPS; if the SDP contains the SPPS, directly decoding and recording a data packet acquired from the client; and if the SDP does not contain the SPPS, acquiring a media packet from the client, and writing SPPS acquired from the media packet into the SDP, and then decoding and recording the data packet acquired from the client. The recording system includes: a forwarding module, a recording module and a signaling processing module.

## Description

### Technical Field

The present invention relates to the field of communication technology, and particularly, to a video recording method and system.

### Background of the Related Art

Video recording is an indispensable function based on an Internet Protocol (IP) at present, and video communication standards on which the video recording relies are also varied. The current video communication standards mainly use two types of parameter sets: a Sequence Parameter Set (SPS) and a Picture Parameter Set (PPS). There are mainly two ways of transmitting the parameter sets: intra-band transmission and out-band transmission.

In the out-band transmission, by performing binary coding (BASE64 coding) on the SPS and PPS, a network identity parameter set field (i.e. a Sprop-Parameter-Sets (SPPS) field) is generated, and it is transmitted through an out-band signaling. For a video receiver, in this manner, parameter set information and a media stream are separately sent, it is guaranteed that the parameter set information can be sent to a decoder in time, but a disadvantage of this manner is that: in a process of network transmission, due to problems such as device compatibility and so on, it may cause that SPPS information is filtered by an intermediate network element, which makes information transmission incomplete.

In the intra-band transmission, SPS information and PPS information are encapsulated into specific units to be sent with the media stream. The decoder can acquire decoding information by parsing these specific units and decode a video stream. For the video receiver, this manner guarantees a reliability of parameter set transmission, but a disadvantage of this manner is that: 1) since the parameter set information is extracted from the media stream, and each specific unit is required to be judged, a processing speed is slow; 2) if a time margin for configuring the decoder is insufficient, a loss of video information will be caused.

Complete information transmission cannot be implemented through either single intra-band transmission or single out-band transmission, if the information transmission is incomplete, the decoder cannot perform correct decoding, and a problem of video damage will occur.

### Summary of the Invention

In view of the above analysis, the embodiments of the present invention provide a video recording method and system, to solve a problem that information transmission is incomplete and a decoder cannot perform correct decoding.

A video recording method with a decoding adaptivity comprises:
acquiring a session description protocol of a client, and checking whether the session description protocol contains network identity parameter set information;
if the session description protocol contains the network identity parameter set information, directly decoding and recording a data packet acquired from the client; and
if the session description protocol does not contain the network identity parameter set information, acquiring a media packet from the client, and writing network identity parameter set information acquired from the media packet into the session description protocol, and then decoding and recording the data packet acquired from the client.

Preferably, the step of writing network identity parameter set information acquired from the media packet into the session description protocol comprises:
acquiring a sequence parameter set and a picture parameter set from the media packet, converting the sequence parameter set and the picture parameter set to network identity parameter set information, and writing the network identity parameter set information into the session description protocol.

Preferably, the step of decoding and recording the data packet acquired from the client comprises:
decapsulating the media packet to obtain a payload, and decoding the payload, and then recording the payload.

Preferably, the step of acquiring a session description protocol of a client comprises:
a recording system performing media negotiation with the client, and acquiring the session description protocol of the client.

The embodiment of the present invention further provides a video recording system, which comprises: a forwarding module, a recording module and a signaling processing module; wherein,
the signaling processing module is configured to: acquire a session description protocol of a client;
the forwarding module is configured to: check whether the session description protocol contains network identity parameter set information; if the session description protocol contains the network identity parameter set information, directly trigger the recording module; and if the session description protocol does not contain the network identity parameter set information, acquire a media packet from the client, and write network identity parameter set information acquired from the media packet into the session description protocol, and then trigger the recording module; and
the recording module is configured to: configure a decoder according to the session description protocol and perform decoding and recording processing.

Preferably, the forwarding module specifically comprises a judgment unit and a conversion unit;
the judgment unit is configured to: check whether there is network identity parameter set information in the session description protocol; if there is network identity parameter set information in the session description protocol, directly trigger the recording module; and if there is no network identity parameter set information in the session description protocol, trigger the conversion unit; and
the conversion unit is configured to: acquire a sequence parameter set and a picture parameter set from the media packet, convert the sequence parameter set and the picture parameter set to network identity parameter set information, write the network identity parameter set information into the session description protocol, and then trigger the recording module.

Preferably, the recording module is configured to: decapsulate the media packet to obtain a payload, and decode the payload, and then record the decoded payload.

Preferably, the signaling processing module is configured to: perform media negotiation with the client, and acquire the session description protocol of the client.

In a video recording method with the decoding adaptivity provided in the embodiment of the present invention, in a case that intra-band transmission is incomplete, the intra-band transmission can be adaptively converted to out-band transmission, and a complete SDP is acquired, which guarantees that a decoder can perform correct decoding.

### Brief Description of Drawings

FIG. 1 is a flow chart of a video recording method with a decoding adaptivity according to the embodiment 1 of the present invention.
FIG. 2 is a flow chart of a video recording method with a decoding adaptivity according to the embodiment 2 of the present invention.
FIG. 3 is a schematic diagram of a video recording system with a decoding adaptivity according to the embodiment 3 of the present invention.
FIG. 4 is a schematic diagram of a video recording system with a decoding adaptivity according to the embodiment 4 of the present invention.

### Preferred Embodiments of the Invention

The preferred embodiments of the present invention will be described in combination with the accompanying drawings below. The embodiments in the present invention and the characteristics in the embodiments can be optionally combined with each other in the condition of no conflict.

### Embodiment 1

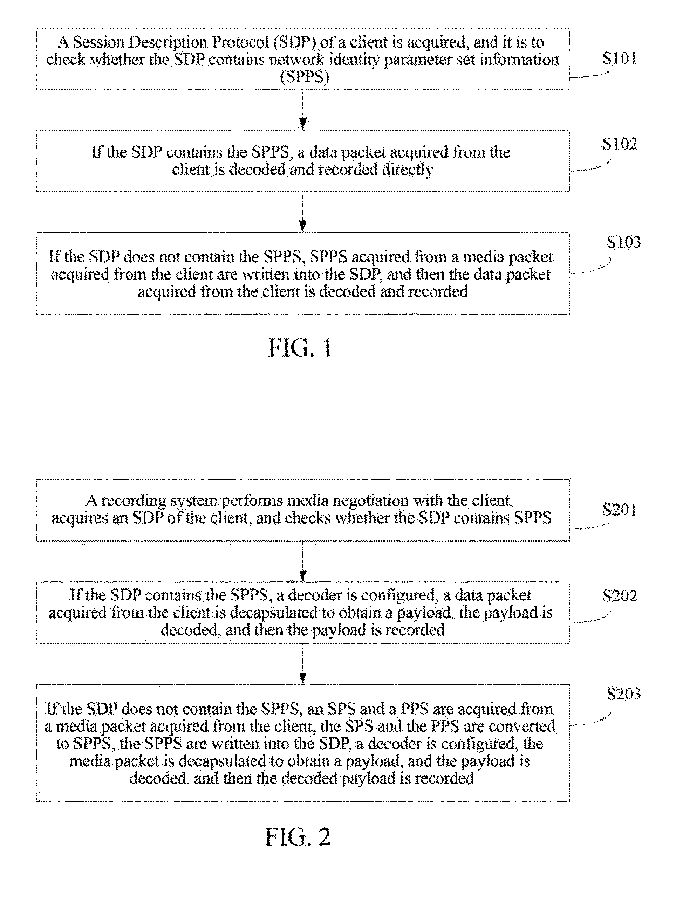

With reference to FIG. 1, a video recording method with a decoding adaptivity provided in the embodiment of the present invention includes the following steps.

In step S101, a Session Description Protocol (SDP) of a client is acquired, and it is to check whether the SDP contains network identity parameter set information (SPPS).

In step S102, if the SDP contains the SPPS, a data packet acquired from the client is decoded and recorded directly.

In step S103, if the SDP does not contain the SPPS, a media packet is acquired from the client, and SPPS acquired from the media packet is written into the SDP, and then the data packet acquired from the client is decoded and recorded.

The embodiment of the present invention is particularly applicable to the H.264 video communication standard.

### Embodiment 2

With reference to FIG. 2, a video recording method with a decoding adaptivity provided in the embodiment of the present invention includes the following steps.

In step S201, a recording system performs media negotiation with the client, acquires an SDP of the client, and checks whether the SDP contains SPPS.

In step S202, if the SDP contains the SPPS, a decoder is configured, a data packet acquired from the client is decapsulated to obtain a payload, and the payload is decoded, and then the payload is recorded.

In step S203, if the SDP does not contain the SPPS, a media packet is acquired from the client, a sequence parameter set (SPS) and a picture parameter set (PPS) are acquired from the media packet, the SPS and the PPS are converted to SPPS, the SPPS is written into the SDP, a decoder is configured, the media packet is decapsulated to obtain a payload, and the payload is decoded, and then the payload is recorded.

### Embodiment 3

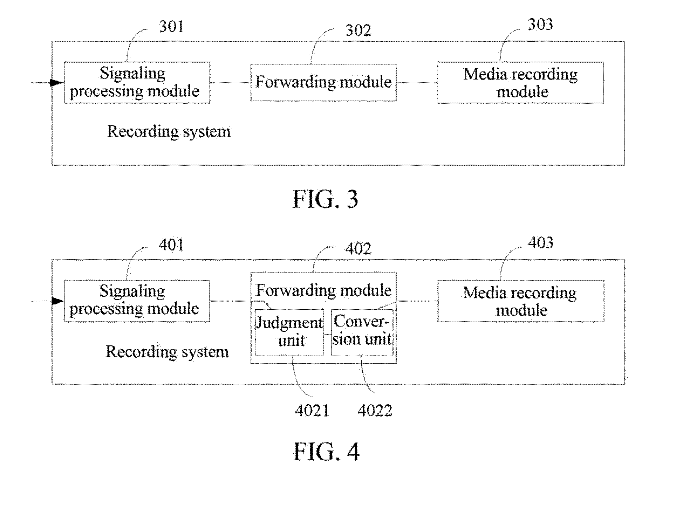

The embodiment of the present invention provides a video recording system with a decoding adaptivity, which can realize rapid processing without video information loss. With reference to FIG. 3, the recording system includes: a signaling processing module 301, a forwarding module 302 and a recording module 303.

The signaling processing module 301 is configured to: acquire a session description protocol of a client;
the forwarding module 302 is configured to: check whether the session description protocol contains network identity parameter set information; if the session description protocol contains the network identity parameter set information, trigger the recording module; and if the session description protocol does not contain the network identity parameter set information, acquire a media packet from the client, and write network identity parameter set information acquired from the media packet into the session description protocol, and then trigger the recording module; and
the recording module 303 is configured to: configure a decoder according to the session description protocol and perform decoding and recording processing.

### Embodiment 4

The embodiment of the present invention provides a video recording system with a decoding adaptivity, which can realize rapid processing without video information loss. With reference to FIG. 4, the recording system includes: a signaling processing module 401, a forwarding module 402 and a recording module 403.

The signaling processing module 401 is configured to: perform media negotiation with a client, and acquire a session description protocol of the client;
the forwarding module 402 includes a judgment unit 4021 and a conversion unit 4022;
the judgment unit 4021 is configured to: check whether the session description protocol contains the network identity parameter set information; if the session description protocol contains the network identity parameter set information, directly trigger the recording module; and if the session description protocol does not contain the network identity parameter set information, trigger the conversion unit; and
the conversion unit 4022 is configured to: acquire a sequence parameter set and a picture parameter set from the media packet, convert the sequence parameter set and the picture parameter set to network identity parameter set information, write the network identity parameter set information into the session description protocol, and then trigger the recording module.

The recording module 403 is configured to: configure a decoder according to the session description protocol, decapsulate the media packet to obtain a payload, and decode the payload, and then record the decoded payload.

In a video recording system with the decoding adaptivity provided in the embodiments of the present invention, a forwarding module receives an SDP of the client, and checks whether the SDP contains SPPS information; if the SDP contains the SPPS information, the SDP is sent to a recording module; and if the SDP does not contain the SPPS information, the system is adaptively adjusted to out-band transmission, and a response is sent to a signaling processing module through the forwarding module; the signaling processing module receives the response sent from the forwarding module, and notifies the client to send a media packet to the forwarding module; the forwarding module receives the media packet sent from the client, acquires an SPS and a PPS from the media stream, and converts the SPS and the PPS to SPPS information, writes the SPPS information into the SDP, and sends the SDP to the recording module, the recording module configures a decoder according to the SDP, decapsulates the media packet to obtain a payload, and decodes the payload, and then records the decoded payload.

Transmission of a video recording system with the decoding adaptivity provided in the embodiments of the present invention is reliable, even though the SPPS information is filtered by an intermediate network element or the out-band negotiation cannot be performed well due to irregular signaling, the system also can adaptively adjust the out-band transmission to the intra-band transmission, and a correct and complete SDP is obtained, which makes video information rapidly processed without loss.

Apparently, the skilled in the art should understand that the modules or steps of the embodiments of the present invention mentioned above can be implemented through a universal media service device. They can be implemented through program codes that can be executed in a media server, thus they can be executed in any media server. Therefore, the present invention is not limited to any combination of hardware and software in a specific form. Moreover, the idea used in the present invention can be not only used for a media recording function, but it can also be widely used for any H.264 decoding flow.

The above description is only for the preferred specific embodiments of the present invention, but the protection scope of the present invention is not limited to this, changes or substitutions that can be easily conceived by any skilled familiar to the art within the technical scope disclosed by the present invention shall be all covered within the protection scope of the present invention. Therefore, the protection scope of the present invention should be subject to the protection scope of the claims.

### Industrial Applicability

In the embodiments of the present invention, in a case that intra-band transmission is incomplete, the intra-band transmission can be adaptively converted to out-band transmission, and a complete SDP is acquired, which guarantees that a decoder can perform correct decoding.

## Claims

1. A video recording method, comprising:
acquiring a session description protocol of a client, and checking whether the session description protocol contains network identity parameter set information;
if the session description protocol contains the network identity parameter set information, directly decoding and recording a data packet acquired from the client; and
if the session description protocol does not contain the network identity parameter set information, acquiring a media packet from the client, and writing network identity parameter set information acquired from the media packet into the session description protocol, and then decoding and recording the data packet acquired from the client.

2. The video recording method with the decoding adaptivity according to claim 1, wherein, the step of writing network identity parameter set information acquired from the media packet into the session description protocol comprises:
acquiring a sequence parameter set and a picture parameter set from the media packet, converting the sequence parameter set and the picture parameter set to network identity parameter set information, and writing the network identity parameter set information into the session description protocol.

3. The video recording method with the decoding adaptivity according to claim 1, wherein, the step of decoding and recording the data packet acquired from the client comprises:
decapsulating the media packet to obtain a payload, and decoding the payload, and then recording the decoded payload.

4. The video recording method with the decoding adaptivity according to claim 1, wherein, the step of acquiring a session description protocol of a client comprises:
performing media negotiation with the client, and acquiring the session description protocol of the client.

5. A video recording system with a decoding adaptivity, comprising: a forwarding module, a recording module and a signaling processing module; wherein,
the signaling processing module is configured to: acquire a session description protocol of a client;
the forwarding module is configured to: check whether the session description protocol contains network identity parameter set information; if the session description protocol contains the network identity parameter set information, directly trigger the recording module; and if the session description protocol does not contain the network identity parameter set information, acquire a media packet from the client, and write network identity parameter set information acquired from the media packet into the session description protocol, and then trigger the recording module; and
the recording module is configured to: configure a decoder according to the session description protocol and perform decoding and recording processing.

6. The video recording system according to claim 5, wherein, the forwarding module comprises a judgment unit and a conversion unit;
the judgment unit is configured to: check whether the session description protocol contains network identity parameter set information; if the session description protocol contains the network identity parameter set information, directly trigger the recording module; and if the session description protocol does not contain the network identity parameter set information, trigger the conversion unit; and
the conversion unit is configured to: acquire a sequence parameter set and a picture parameter set from the media packet, convert the sequence parameter set and the picture parameter set to network identity parameter set information, write the network identity parameter set information into the session description protocol, and then trigger the recording module.

7. The video recording system according to claim 5, wherein, the recording module is configured to: decapsulate the media packet to obtain a payload, and decode the payload, and then record the decoded payload.

8. The video recording system according to claim 5, wherein, the signaling processing module is configured to: perform media negotiation with the client, and acquire the session description protocol of the client.
